(19) Europäisches Patentamt
European Patent Office
Office européen des brevets

(11) Publication number: **0 533 482 A1**

(12) **EUROPEAN PATENT APPLICATION**

(21) Application number: **92308505.4**

(22) Date of filing: **17.09.92**

(51) Int. Cl.[5]: **G03G 15/00**, G03G 5/00, B29C 41/04

(30) Priority: **17.09.91 US 761128**

(43) Date of publication of application: **24.03.93 Bulletin 93/12**

(84) Designated Contracting States: **DE FR GB**

(71) Applicant: **XEROX CORPORATION**
**Xerox Square**
**Rochester New York 14644 (US)**

(72) Inventor: **Weatherall, Douglas J.**
**25 Fourwinds Drive**
**North York, Ontario (CA)**
Inventor: **Quinlan, Marion H.**
**4058 Farrier Court**
**Mississauga, Ontario (CA)**
Inventor: **Kenny, Andrew O.**
**2074 Thornlea Drive**
**Oakville, Ontario (CA)**

(74) Representative: **Hill, Cecilia Ann et al**
**Rank Xerox Patent Department Albion House,**
**55 New Oxford Street**
**London WC1A 1BS (GB)**

(54) **Processes for preparing imaging members.**

(57) Disclosed is a process for preparing a multilayered cylindrical article such as a drum or a seamless belt which comprises introducing into a cylindrical mold (1) a composition comprising a liquid, uncured resin material and a filler material of a density different from that of the uncured resin material, spinning the mold about its axis at a speed sufficient to cause separation of the uncured resin material and the filler material into discrete layers, and subsequently curing the uncured resin to form a cylindrical article having at least two layers (8,10), wherein the outermost layer comprises the material of higher density. Subsequent to formation, the multilayered cylindrical article can be coated with additional layers. Further, additional layers can be added to the inside surface of the cylinder by introducing the additional layer material into the mold and spin casting to form a layer. The cylindrical articles can be employed as imaging members in ionographic, electrophotographic, and similar imaging processes.

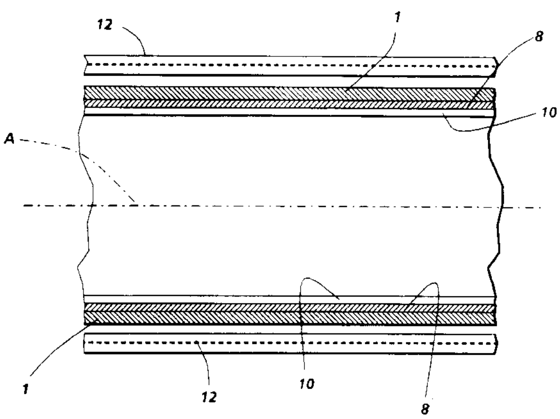

FIG. 1

EP 0 533 482 A1

The present invention is directed to processes for preparing cylindrical articles, more especially drums or belts which can subsequently be employed as imaging members or further processed into imaging members.

Processes for forming cylinders or belts by centrifugal or spin casting processes are known. The process generally entails rotating a mold or mandrel having a cylindrically shaped cavity about a center axis and introducing a film forming polymer composition in the liquid state into the cavity. The film forming polymer is subsequently solidified to form the desired polymeric tube. Film forming polymer compositions introduced into the cavity can be solidified by any of several drying or curing techniques, including oven drying, infrared lamp drying, vacuum chamber drying, impingement drying, dielectric heating, and the like. If desired, a release coating can be used on the inside of the mold or mandrel, such as silicone resins cured with a catalyst, silicone oil, fluorocarbon oils and coatings, waxes, fatty acids and salts, hydrocarbon oils, and the like.

It is an object of the present invention to provide an improved processes for preparing cylindrical articles, more especially drums and belts suitable for electrophotographic and ionographic applications.

The present invention provides a process which comprises introducing into a cylindrical mold a composition comprising a liquid, uncured resin material and a filler material of a density different from that of the uncured resin material, spinning the mold about its axis at a speed sufficient to cause separation of the uncured resin material and the filler material into layers, and subsequently curing the uncured resin to form a cylindrical article having at least two layers, wherein the outermost layer comprises the material of higher density.

Multilayered cylindrical articles prepared by processes in accordance with the invention can be employed in several applications. For example, when one layer is electrically conductive and the other is electrically insulating, the article can be employed as an ionographic imaging member or as the conductive substrate layer of an electrophotographic imaging member. Optionally, additional layers can be applied to the cylindrical article by adding additional uncured material of the desired composition to the mold either prior to or subsequent to the curing step, spinning the mold to distribute the additional material on the inner surface of the mold wall, and curing the additional material. Alternatively, additional layers can be added to the cylindrical article prepared by these processes by other conventional coating methods, such as spray coating, dip coating, vacuum evaporation, or the like.

The present invention further provides an imaging process which comprises preparing a multilayered imaging member having a conductive layer and a dielectric layer by a process which comprises introducing into a cylindrical mold a composition comprising a mixture of at least two different materials, at least one of which is a liquid, uncured resin material, at least one of which is conductive, and at least one of which is a dielectric, wherein the dielectric material and the conductive material are of different densities; spinning the mold about its axis at a speed sufficient to cause separation of the conductive material and the dielectric material into layers; and curing the uncured resin to form a cylinder having at least two layers, of which at least one of which is conductive and at least one of which is dielectric, wherein the outermost layer comprises the material of high density; generating an electrostatic latent image on the dielectric layer with an electrostatic latent image on the dielectric layer with an electrographic imaging means; and developing the latent image.

The present invention also provides an imaging process which comprises preparing a multilayered imaging member by a process which comprises introducing into a cylindrical mold a composition comprising a photogenerating material and spinning the mold about its axis, thereby forming a layer of photogenerating material on the surface of the mold; introducing into the mold a composition comprising a mixture of at least two different materials, at least one of which is liquid, uncured resin material and at least one of which is conductive, wherein the liquid uncured resin material and the conductive material are of different densities; spinning the mold about its axis at a speed sufficient to cause separation of the conductive material and the liquid uncured resin material into layers; and curing the uncured resin to form a cylinder having at least three layers, of which the outer layer comprises a photogenerating material, wherein at least one of the other two layers is conductive; generating an electrostatic latent image on the photogenerating layer; and developing the latent image. In a process in accordance with this aspect of the invention, the composition comprising the photogenerating material may be at least partially cured prior to introducing the mixture into the mold. Alternatively, the composition comprising the photogenerating material may be cured subsequent to introduction of the mixture into the mold.

The present invention further provides an imaging process which comprises preparing a multilayered imaging member by a process which comprises introducing into a cylindrical mold a composition comprising a mixture of at least two different materials, at least one of which is a liquid, uncured resin material and at least one of which is conductive, wherein the liquid uncured resin material and the conductive material are of different densities; spinning the mold about its axis at a speed sufficient to cause separation of the conductive material and the liquid uncured resin material into layers; introducing into a cylindrical mold a composition comprising a photogenerating material and spinning the mold about its axis, thereby forming a layer of photogenerating material and wherein at least one of the other two layers is conductive; generating an electrostatic latent image on the photogenerating layer; and developing the latent image. In a process in accordance with this aspect

of the invention, the uncured resin may be at least partially cured prior to introducing the composition comprising a photogenerating material into the mold. Alternatively, the uncured resin may be cured subsequent to introduction of the composition comprising a photogenerating material into the mold.

The present invention also provides an imaging process which comprises preparing a multilayered imaging member by a process which comprises introducing into a cylindrical mold a composition comprising a mixture of at least two different materials, at least one of which is a liquid, uncured resin material and least one of which is conductive, wherein the liquid uncured resin material and the conductive material are of different densities; spinning the mold about its axis at a speed sufficient to cause separation of the conductive material and the liquid uncured resin material into layers; curing the uncured resin to form a cylinder having at least two layers, wherein at least one of the layers is conductive; removing the cylinder from the mold; and subsequent to removal from the mold, applying a layer of photogenerating material to at least one surface of the cylinder; generating an electrostatic latent image on the photogenerating layer; and developing the latent image.

In accordance with yet another aspect of the invention, there is provided a process for preparing a cylindrical article which comprises introducing into a cylindrical mold a composition comprising a liquid, uncured resin material and a conductive filler material of a density similar to that of the uncured resin material; spinning the mold about its axis at a speed that prevents separation of the uncured resin material an the filler material into layers; and subsequently curing the uncured resin to form a cylindrical conductive article. That process may form part of an imaging process which comprises applying a layer of photogenerator material to the cylindrical conductive article; generating an electrostatic latent image on the photogenerating layer; and developing the latent image.

By way of example only, embodiments of the invention will be described with reference to Figures 1 to 3 in the accompanying drawings, which illustrate schematically examples of apparatuses wherein a.mixture of materials of different densities is separated by centrifugal casting in a mold.

A process in accordance with the present invention entails the formation of cylindrical articles such as drums or seamless belts by spinning about its axis a cylindrical mold containing a composition comprising at least two materials and causing the separation of at least two of the materials into layers, followed by curing the composition. At least one of the materials is in the liquid state and is curable by any suitable process, such as application of heat or ultraviolet light, chemical means such as the application of a catalyst, or the like. Typical materials include liquid uncured resins, such as unsaturated polyester resins, including isophthalic polyester resins with styrene monomer as crosslinking agent, isophthalic polyester resins with diallyl phthalate monomer as crosslinking agent, isophthalic polyester resins with vinyl toluene monomer as crosslinking agent, orthophthalic polyester resins with styrene monomer as crosslinking agent, orthophthalic polyester resins with diallyl phthalate monomer as crosslinking agent, orthophthalic polyester resins with vinyl toluene monomer as crosslinking agent, and the like; vinyl ester resins, such as bisphenol-A methacrylate resins with styrene monomer as crosslinking agent, bisphenol-A methacrylate resins with diallyl phthalate monomer as crosslinking agent, bisphenol-A methacrylate resins with vinyl toluene monomer as crosslinking agent, bisphenol-A acrylate resins with styrene monomer as crosslinking agent, bisphenol-A acrylate resins with diallyl phthalate monomer as crosslinking agent, bisphenol-A acrylate resins with vinyl toluene monomer as crosslinking agent, and the like; epoxy resins; phenolic resins; polyimide resins; polyamide resins; and the like, as well as mixtures thereof. Any other suitable curable material can also be employed.

The liquid material generally contains a polymerization initiator. An initiator is useful for forming free radicals to initiate polymerization of the liquid material within the mold; while an initiator is not required, polymerization by processes such as heating in the absence of an initiator can consume large amounts of time, thus rendering such processes economically undesirable. Examples of initiators include peroxide initiators, such as methyl ethyl ketone peroxide, benzoyl peroxide, t-butyl perbenzoate, or the like, as well as mixtures thereof, which generally function as chemical or thermal initiators, as well as photoinitiators, such as dicyclopentadienyl titanium dichloride. Initiators can be present in any effective amount; typically, the initiator is present in an amount of from about 1 to about 2 percent by weight of the liquid. In addition, the liquid can contain polymerization promoters or accelerators, such as cobalt octoate, cobalt naphthenate, dimethyl aniline, diethyl aniline, or the like, as well as mixtures thereof. A polymerization promoter is useful for accelerating breakdown of the initiator, thus speeding initiation of polymerization. Polymerization promoters or accelerators can be present in any effective amount; typically the promoter or accelerator is present in an amount of from about 0. 10 to about 0.25 percent by weight of the liquid.

The liquid material contains at least one additional material or filler material of a density different from that of the liquid. When a final product having a layer of the filler material on the inside diameter of the cylinder is desired, the filler material is of a density less than that of the resin. For example, a composition comprising an unsaturated polyester resin with a density of about 1.0 gram per milliliter and silver coated hollow glass microspheres having a density less than that of the resin (about 0.65 grams per milliliter, available from PQ Corporation) will, when introduced into a cylindrical mold, spun at an adequate speed, and cured, result in formation of a cylindrical drum having the silver coated spheres in a matrix of the resin situated in a layer on the inside of the drum and a layer of the pure insulating resin on the outside. Since the silver coated glass spheres are conductive and the resin is insulative, the drum has a conductive inner layer and an insulating outer layer, and can be employed as, for example, an ionographic imaging member or as an electrophotographic imaging member substrate having a blocking layer. When a final product having a layer of the filler material on the outside of the cylinder is desired, the filler material is of a density greater than that of the resin. For example, a composition comprising an unsaturated polyester resin with a density of about 1.0 gram per milliliter and graphite powder having a density greater than that of the resin (about 1.9 grams per milliliter) will, when introduced into a cylindrical mold, spun at an adequate speed, and cured, result in formation of a cylindrical drum having the conductive graphite powder in a matrix of the resin situated in a layer on the outside of the drum and a layer of the pure insulating resin on the inside.

Examples of suitable filler materials include particles or fibers of metals such as nickel, iron, cobalt, stainless steel, aluminum, magnetic metals such as nickel or silver, magnetic metallic oxides such as iron oxide, carbon black, graphite, glass, ceramic materials, other materials such as silicon carbide or aluminum oxide, spheres or fibers of materials such as glass, ceramic materials, carbon black, graphite, or the like optionally coated with magnetic materials such as nickel or silver, thermoplastic powders such as polyethylene, Teflon®, or the like, and mixtures thereof.

In addition, cylindrical articles having more than two layers can be prepared. For example, a composition comprising an unsaturated polyester resin, silver coated hollow glass microspheres with a density less than that of the resin, and particles of silicon carbide having a density higher than that of the insulating resin will, when introduced into a cylindrical mold, spun at an adequate speed, and cured, result in formation of a cylindrical drum having the nickel coated spheres in a matrix of the resin situated in a layer on the inside of the drum, a layer of the pure insulating resin as a middle layer, and a layer of the silicon carbide particles in a matrix of the resin on the outside. Since the silicon carbide particles impart abrasion resistant characteristics to the resin, the resulting drum has an abrasion resistant insulating coating on the outside, and is suitable for applications such as ionographic imaging in apparatuses having steel cleaning blade systems.

The segregation of the materials into separate layers is a function of several process and materials characteristics, and can be described by the following system of equations (C. J. Geankoplis, Transport Processes and Unit Operations, Allyn & Bacon, Inc. (Massachusetts 1983):

$$(1) \qquad v_t = \frac{\omega^2 r D_p^2(\rho_p - \rho)(\varepsilon^2 \Psi_p)}{18\mu}$$

since $v_t = dr/dt$, this equation can be integrated between the limits of $r = r_1$ at $t = 0$ and $r = r_2$ at $t = t_T$ to obtain:

$$(2) \qquad t_T = \frac{18\mu * \ln(r_2/r_1)}{\omega^2 D_p^2(\rho_p - \rho)(\varepsilon^2 \Psi_p)}$$

wherein

$v_t$ = terminal velocity
$\omega$ = angular velocity
r = distance from the axis of rotation to the particle
$D_p$ = filler particle diameter
$\rho_p$ = filler particle density
$\rho$ = resin density
$\mu$ = resin viscosity
$\varepsilon$ = void fraction
$\Psi_p$ = viscosity correction factor for hindered settling
$t_T$ = settling time
$r_1$ = starting point of particle at time t = 0
$r_2$ = ending point of particle at time = $t_T$

Any effective rotation speed can be employed to cause the mixture components to separate into layers. Typical rotation speeds are from about 10 to about 10,000 revolutions per minute, and preferably from about 200 to about 5,000 revolutions per minute, although the rotation speed can be outside of this range provided that the desired degree of separation occurs. The mold is spun at a speed sufficient to generate effective centrifugal acceleration, typically at least 2 g's, and up to 100,000 g's or more. The filler particles can be of any suitable size and shape, and typically have a particle size of from about 0.10 to about 100 microns, and preferably from about 1 to about 10 microns, although the particle size can be outside of this range. The viscosity of the liquid typically is from about 1 to about 100,000 centipoise, and preferably from about 500 to about 6,000

centipoise, although the viscosity can be outside of this range provided that adequate separation occurs. The density of the liquid typically is from about 0.9 to about 2.0 grams per milliliter, and preferably from about 1.0 to about 1.2 grams per milliliter, although the liquid density can be outside of this range. The density of the filler particles typically is from about 0. 10 to about 10 grams per milliliter, and preferably from about 0.15 to about 6 grams per milliliter, although the filler density can be outside of this range. Typically the density of the liquid and the density of the filler particles differs by at least about 0.1 gram per milliliter, and preferably by at least about 0.4 gram per milliliter, although a filler and a liquid closer to each other in density can be selected provided that the desired degree of separation occurs. When more than one filler is present, each component of the mixture preferably is separated from the other components with respect to density by at least about 0.1 gram per milliliter, and preferably by at least about 0.4 gram per milliliter, although they can be closer to each other in density provided that the desired degree of separation occurs. Further, the mixture of materials to be separated can comprise two or more liquids instead of a liquid and a solid, with the other liquid functioning as the filler.

Illustrated schematically in Figures 1, 2, and 3 are examples of apparatuses wherein mixtures of materials of different densities are separated by centrifugal casting in a mold. As shown in cross section, mold 1 is situated to rotate about axis A. Rotation can be accomplished by any suitable means, such as placing an end cap on one end of the mold, fitting a shaft to the end cap, and rotating the shaft by any suitable means, such as a motor. Preferably, mold 1 is constructed to prevent the liquid mixture introduced into the mold from flowing out of the open ends. A mixture of a curable liquid and a second material of a density different from that of the curable liquid is introduced into mold 1 while the mold is spun about axis A. As shown in Figure 1, the mixture of materials has separated into two layers as a result of the centrifugal forces generated by rotation of mold 1. The outer layer 8 contains the material of relatively higher density and the inner layer 10 is primarily made up of the material of lower density. When the desired degree of separation has been achieved, the curable liquid is cured by heat, radiation, activation of a catalyst, or the like. As shown in Figure 1, curing is by heating the mold 1 with heat source 12. Typically, the mold is spun during the curing process, and the multilayered cylinder thus formed is then removed from the mold.

Figure 2 illustrates schematically another suitable apparatus for rotating the mold. As illustrated, mold 1 is rotated about axis A by placing on each end of mold 1 circular end caps 21 having perforations 23 situated in their centers. Into perforations 23 are then inserted pivots 25 and 26 mounted on sliding supports 27. Pivot 25 is passive and spins as mold 1 and its end cap are rotated. Pivot 26 has a surface suitable for positive mating with perforation 23 on the end cap, such as a slot-in-groove arrangement, a Phillips screwdriver arrangement, or any other suitable mating. Pivot 26 is caused to spin by any suitable means, such as a motor (not shown), and when mold 1 is mounted on the apparatus by means of end caps 21 and pivots 25 and 26, the mold rotates. Sliding supports 27 slide along stationary support 29 in a direction parallel to axis A to allow mounting of the capped mold on the pivots; subsequent to mounting, sliding supports 27 are locked into position.

Figure 3 illustrates schematically yet another suitable apparatus for rotating the mold. As illustrated, mold 1 is mounted on supports 31 having high speed ultra precision bearings 33 situated in bearing housing 35 so that bearings 33 contact the surface of mold 1. The mold is then rotated by belt 37 which contacts the surface of mold 1 and is driven by motor 39. As a result of rotation of the mold, the mixture initially introduced into mold 1 comprising a curable liquid and a second material of a density different from that of the curable liquid has separated into outer layer 8, primarily comprising the material of relatively higher density, and inner layer 10, primarily comprising the material of lower density.

The mold employed in the apparatus shown in the drawings can be of any suitable material, such as glass, plastics or other polymeric materials, nonmagnetic metals, nonmagnetic ceramics, or the like. Curing means, such as a hot air gun or an infrared light source, can be placed inside or outside the mold as desired. The mold dimensions are determined by the desired dimensions of the layered article produced by the process.

Prior to performing a process in accordance with the present invention, the inner surface of the mold can optionally be coated with a mold release agent. Removal of a multilayered cylindrical article from the mold can present difficulties, particularly when the cylinder comprises a thermoset resin with very low mold shrinkage characteristics. Removal can be facilitated by coating the mold surface with a release agent. In one particularly preferred method, the mold is coated by introducing into the mold a molten release material, such as a wax, and spinning the mold to coat the inner surface centrifugally, followed by solidifying the release material prior to addition of the mixture of materials to be separated into layers. When the multilayered cylinder has been prepared, it is ejected from the mold by remelting the release material. Coating the inner surface of the mold by this process also has advantages in that the inner surface of the solidified release material perfectly defines the axis of rotation of the mold and provides a mold surface which is glass smooth. Thus, the coated mold has an excellent surface finish and very uniform dimensions. Examples of release materials include silicone resins cured with a catalyst, silicone oil, fluorocarbon oils and coatings, waxes, fatty acids and salts, hydrocarbon oils, and the like.

The mixture of materials to be separated into layers can be introduced into the mold by any suitable process, such as with an air operated caulking gun, an extruder, or the like. The mold is spun for any effective period of time during introduction of the material into the mold. A typical time range is from about 5 to about 20 seconds of axial traverse while dispersing, which means that the dispenser is moved along the length of the mold wall to deposit the material uniformly on the mold wall; within about 5 to about 20 seconds, the dispenser has moved along the length of the mold one or more times to dispense the material. Slower or faster dispensing times can also be employed if desired, and slower times will typically be employed when the material is dispensed without the benefit of an automated dispenser. The mold can be maintained at any desired or suitable temperature during introduction of the material, with typical temperatures being from about 20 to about 150°C, and can either be stationary during dispensing (0 revolutions per minute) or maintained at any desired or suitable speed of rotation during introduction of material, with typical speeds being from about 1 to about 5,000 revolutions per minute. The mold can be spun at the same speed during both dispensing and separation of the materials into layers, or if desired the speed can be altered after the material has been deposited on the mold wall. Spinning of the mixture in the mold is continued until the desired degree of separation has resulted; typically, separation of a mixture into layers takes from about 3 seconds to about 3 minutes, although the actual time employed can be outside of this range. Curing of the separated layers can be by any suitable process. For example, when the liquid component of the mixture is a resin curable to a solid by exposure to ultraviolet light, an ultraviolet lamp situated outside or inside of the mold can be employed to expose and cure the layers and thus form the multilayered cylinder. When the lamp is situated outside of the mold, the mold is of a material that is transparent to ultraviolet radiation. Similarly, when the liquid component of the mixture is a resin curable to a solid by heating, the mold itself can be heated to effect curing. Heating of the mold can be accomplished by infrared heating, induction heating, or the like. Curing can also take place at room temperature with the use of suitable initiators and polymerization promoters; for example, an unsaturated polyester resin can be cured by the activation of a methyl ethyl ketone peroxide initiator with a cobalt octoate promoter.

During cure, the resin typically shrinks, and as a result, the product thus formed can be removed easily from the mold. In addition, if the resin is heat cured, the difference between the thermal expansion of the mold and that of the resin can assist in the ejection of the product; thus, it is not required that the resin shrink to enable removal of the product.

Alternatively, instead of producing a two-layered drum by spincasting of a mixture of a curable resin and an additional material of a density sufficiently different from that of the resin to enable separation of the resin and the additional material into separate layers, a single-layered cylindrical drum or belt can be prepared by spin-casting a mixture of a curable resin and an additional material either of a density very similar to that of the resin or of a particulate nature wherein the particles are sufficiently small that separation from the resin during spin-casting will either require an infinite amount of time or require a prohibitively long period of time, as indicated by Equation (2) herein. Further, if the viscosity of the resin is sufficiently high, or if the angular velocity achieved during spinning is sufficiently low, as can be seen from Equation (2), separation into a two-layered structure will also either require an infinite amount of time or require a prohibitively long period of time. Thus, if, for example, a mixture of Polylite 33-402 (an unsaturated polyester dissolved in a styrene monomer) with a density of 1.08 grams per milliliter and carbon black particles is spun in a mold, a single layer conductive cylindrical article will be obtained, which article can then be used as, for example, a conductive substrate for a photoreceptor.

Multilayered cylindrical articles prepared by the processes in accordance with the present invention are suitable for use as conductive substrates in electrophotographic imaging members. Additional layers may be added to the cylinders to prepare such members. These layers, generally applied to the conductive surface of the cylinder, may comprise a blocking layer, an adhesive layer, a photoconductive layer, a charge transport layer, or a combination of these layers with or without additional layers. One embodiment of the present invention is a process for preparing an electrophotographic imaging member which comprises preparing a cylindrical article comprising a conductive layer and an insulating layer as detailed herein and coating onto the cylinder a layer of a photogenerating material. The imaging member can then be employed in an imaging process. Another embodiment of the present invention is an imaging process which comprises (1) preparing an imaging member by (a) preparing a cylindrical article comprising a conductive layer and an insulating layer as described herein; and (b) coating onto the cylinder a layer of a photogenerating material; (2) forming an electrostatic latent image on the imaging member; (3) developing the latent image; and (4) transferring the developed image to a substrate. Optionally, the transferred image can be permanently affixed to the substrate by any suitable means. Imaging members formed by processes according to the present invention can be photoconductive or photosensitive in nature, wherein the latent image is formed by exposure to a light image, ionographic in nature, wherein the imaging member has a dielectric surface and the image is applied with an ionographic writing head to the dielectric surface, or by any other suitable imaging process.

Any suitable electrically conductive material can be employed as a conductive layer for imaging members prepared by processes according to the present invention, including carbon black, graphite, copper, brass, nickel, zinc, chromium, stainless steel, conductive plastics and rubbers, aluminum, steel, cadmium, silver, gold, indium, tin, metal oxides, including tin oxide and indium tin oxide, and the like. When the imaging member is to be employed for ionographic imaging processes, it can consist of a conductive layer and a dielectric layer. When a cylindrical article is prepared according to the present invention, an electrically conductive layer can be applied by any method suitable for the electrically conductive material, such as vacuum deposition, electrolytic deposition, solvent coating, or the like. The conductive layer is of an effective thickness, generally from about 5 to about 250 microns, although the thickness can be outside of this range. Similarly, the dielectric layer is of an effective thickness, generally from about 1 to about 20 microns, although the thickness can be outside of this range.

Any suitable blocking layer or layers may optionally be applied as one of the imaging member layers. Typical blocking layers include gelatin (e.g. Gelatin 225, available from Knox Gelatine Inc.), and Carboset 515 (B.F. Goodrich Chemical Company) dissolved in water and methanol, polyvinyl alcohol, polyamides, gamma-aminopropyl triethoxysilane, and the like, used alone or in mixtures and blends. Blocking layers generally range in thickness of from about 0.01 micron to about 2 microns, and preferably have a thickness of from about 0.1 micron to about 1 micron although thicknesses outside these ranges may be selected. The blocking layer may be applied with any suitable liquid carrier. Typical liquid carriers include water, methanol, isopropyl alcohol, ketones, esters, hydrocarbons, and the like.

Any suitable adhesive layer may be applied as one of the imaging member layers. Typical adhesive layers include polyesters such as Du Pont 49,000, available from E.I. Du Pont de Nemours & Company, poly(2-vinylpyridine), poly(4-vinylpyridine), and the like. Adhesive layers generally range in thickness of from about 0.05 micron to about 2 microns, and preferably have a thickness of from about 0.1 micron to about 1 micron although thicknesses outside these ranges may be selected. The adhesive layer may be applied with a suitable liquid carrier. Typical liquid carriers include methylene chloride, methanol, isopropyl alcohol, ketones, esters, hydrocarbons, and the like.

Any suitable photoconductive layer or layers may be applied as one of the imaging member layers. The photoconductive layer or layers may contain inorganic or organic photoconductive materials. Typical inorganic photoconductive materials include well known materials such as amorphous selenium, trigonal selenium, selenium alloys, halogen-doped selenium alloys such as selenium-tellurium, selenium-tellurium-arsenic, selenium-arsenic, and the like, cadmium sulfoselenide, cadmium selenide, cadmium sulfide, zinc oxide, titanium dioxide and the like. Inorganic photoconductive materials are normally dispersed in a film forming polymer binder. Examples of suitable binders include poly(N-vinylcarbazole), polyvinylbutyral, polystyrene, phenoxy resins, polycarbonate, polyethylene terephthalate, poly N-vinylpyrrolidinone, polyvinyl alcohol, and the like. Typical organic photoconductors include phthalocyanines, quinacridones, pyrazalones, polyvinylcarbazole-2,4,7-trinitrofluorenone, anthracene and the like. Many organic photoconductor materials may also be used as particles dispersed in a resin binder. Typically, the photoconductive material is present in an amount of from about 5 to about 80 percent by weight and the binder is present in an amount of from about 20 to about 95 percent by weight.

Any suitable multilayer photoconductors may also be employed in the imaging member. The multilayer photoconductors typically comprise at least two electrically operative layers, a photogenerating or charge generating layer and a charge transport layer. The charge generating layer and charge transport layer as well as the other layers may be applied in any suitable order to produce either positive or negative charging photoreceptors. For example, the charge generating layer may be applied prior to the charge transport layer as illustrated in U.S. Patent 4,265,990 or the charge transport layer may be applied prior to the charge generating layer as illustrated in U.S. Patent 4,346,158.

The photogenerating layer may comprise single or multiple layers comprising inorganic or organic compositions and the like. One example of a generator layer is described in U.S. Patent 3,121,006, wherein finely divided particles of a photoconductive inorganic compound are dispersed in an electrically insulating organic resin binder. Useful binder materials disclosed therein include those which are incapable of transporting for any significant distance injected charge carriers generated by the photoconductive particles. Thus, the photoconductive particles must be in substantially contiguous particle to particle contact throughout the layer for the purpose of permitting charge dissipation required for cyclic operation. Thus, about 50 percent by volume of photoconductive particles is usually necessary in order to obtain sufficient photoconductive particle to particle contact for rapid discharge.

Examples of photogenerating layers include trigonal selenium, alloys of selenium with elements such as tellurium, arsenic, and the like, amorphous silicon, various phthalocyanine pigments such as the X-form of metal free phthalocyanine described in U.S. Patent 3,357,989, metal phthalocyanines such as copper phthalocyanine, quinacridones available from Du Pont under the trade name Monastral Red, Monastral Violet and Monastral Red Y, substituted 2,4-diamino-triazines disclosed in U.S. Patent 3,442,781, polynuclear aromatic quinones, Indofast Violet Lake B, Indofast Brilliant Scarlet and Indofast Orange. Examples of photosensitive members having at least two electrically operative layers include the charge generator layer and diamine containing transport layer members disclosed in U.S. Patent 4,265,990, U.S. Patent 4,233,384, U.S. Patent 4,306,008, and U.S. Patent 4,299,897; dyestuff generator layer and oxadiazole, pyrazalone, imidazole, bromopyrene, nitrofluourene and nitronaphthalimide derivative containing charge transport layer members disclosed in U.S. Patent 3,895,944; generator layer and hydrazone containing charge transport layer members disclosed in U.S. Patent 4,150,987; generator layer and a tri-aryl pyrazoline compound containing charge transport layer members disclosed in U.S. Patent 3,837,851; and the like.

Photogenerating layers containing photoconductive compositions and/or pigments and the resinous binder material generally range in thickness of from about 0.1 micron to about 5.0 microns, and preferably have a thickness of from about 0.3 micron to about 1 micron although thicknesses outside these ranges may be selected. The photogenerating composition or pigment may be present in the film forming polymer binder compositions in various amounts. For example, from about 10 percent by volume to about 60 percent by volume of the photogenerating pigment may be dispersed in about 40 percent by volume to about 90 percent by volume of the film forming polymer binder composition, and preferably from about 20 percent by volume to about 30 percent by volume of the photogenerating pigment may be dispersed in about 70 percent by volume to about 80 percent by volume of the film forming polymer binder composition. The particle size of the photoconductive compositions and/or pigments should be less than the thickness of the deposited solidified layer and, more preferably between about 0.01 micron and about 0.5 micron to facilitate better coating uniformity.

Any suitable transport layer may be applied as one of the imaging member coatings to form a multilayered photoconductor. The transport layer may contain a film forming polymer binder and a charge transport material. A preferred multilayered photoconductor comprises a charge generation layer comprising a layer of photoconductive material and a contiguous charge transport layer of a polycarbonate resin material having a molecular weight of from about 20,000 to about 120,000 having dispersed therein from about 25 to about 75 percent by weight of one or more compounds having the general formula:

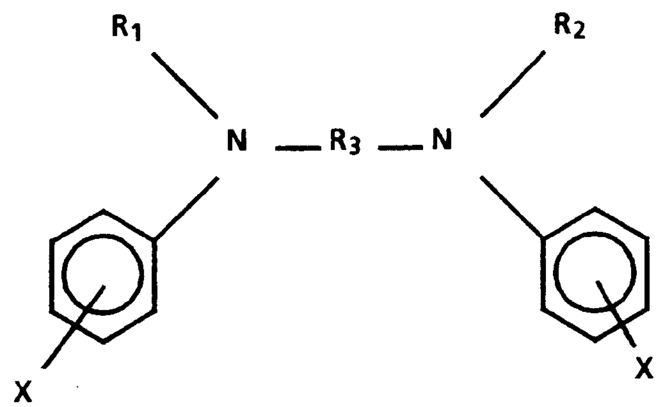

wherein $R_1$ and $R_2$ are an aromatic group selected from the group consisting of a substituted or unsubstituted phenyl group, naphthyl group, and polyphenyl group, $R_3$ is selected from the group consisting of a substituted or unsubstituted biphenyl group, diphenyl ether group, alkyl group having from 1 to 18 carbon atoms, and cycloaliphatic group having from 3 to 12 carbon atoms and X is selected from the group consisting of an alkyl group having from 1 to about 4 carbon atoms and chlorine, the photoconductive layer exhibiting the capability of photogeneration of holes and injection of the holes and the charge transport layer being substantially non-absorbing in the spectral region at which the photoconductive layer generates and injects photogenerated holes but being capable of supporting the injection of photogenerated holes from the photoconductive layer and transporting the holes through the charge transport layer. Examples of charge transporting aromatic amines including those represented by the structural formula above and others for charge transport layers capable of supporting the injection of photogenerated holes of a charge generating layer and transporting the holes through the charge transport layer include N,N'-bis(alkylphenyl)-[1,1'-biphenyl]-4,4'-diamine wherein the alkyl is, for example, methyl, ethyl, propyl, n-butyl, etc., N,N'-diphenyl-N,N'-bis(chlorophenyl)-[1,1'-biphenyl]-4,4'-diamine, N,N'-diphenyl-N,N'-bis(3''-methylphenyl)-(1,1'-biphenyl)-4,4'-diamine, and the like dispersed in an inactive resin binder. Examples of some of these transport materials are described, for example

in U.S. Patent 4,265,990 to Stolka et al. Other examples of charge transport layers capable of supporting the injection of photogenerated holes of a charge generating layer and transporting the holes through the charge transport layer include triphenylmethane, bis(4-diethylamine-2-methylphenyl) phenylmethane; 4′-4″-bis(diethylamino)-2′,2″-dimethyltriphenyl methane and the like dispersed in an inactive resin binder. Numerous inactive resin materials may be employed in the charge transport layer including those described, for example, in U.S. Patent 3,121,006. The resinous binder for the charge transport layer may be identical to the resinous binder material employed in the charge generating layer. Typical organic resinous binders include thermoplastic and thermosetting resins such as polycarbonates, polyesters, polyamides, polyurethanes, polystyrenes, polyarylethers, polyarylsulfones, polybutadienes, polysulfones, polyethersulfones, polyethylenes, polypropylenes, polyimides, polymethylpentenes, polyphenylene sulfides, polyvinyl acetate, polysiloxanes, polyacrylates, polyvinyl acetals, polyamides, polyimides, amino resins, phenylene oxide resins, terephthalic acid resins, epoxy resins, phenolic resins, polystyrene and acrylonitrile copolymers, polyvinylchloride, vinylchloride and vinyl acetate copolymers, acrylate copolymers, alkyd resins, cellulosic film formers, poly(amide-imide), styrene-butadiene copolymers, vinylidenechloride-vinylchloride copolymers, vinylacetate-vinylidenechloride copolymers, styrene-alkyd resins, and the like. These polymers may be block, random, or alternating copolymers.

Generally, the thickness of the solidified transport layer is between about 5 to about 100 microns, but thicknesses outside this range can also be used. The charge transport layer should be an insulator to the extent that the electrostatic charge placed on the charge transport layer is not conducted in the absence of illumination at a rate sufficient to prevent formation and retention of an electrostatic latent image thereon. In general, the ratio of the thickness of the solidified charge transport layer to the charge generator layer is preferably maintained from about 2:1 to 200:1 and in some instances as great as 400:1.

The charge blocking layer generally has a thickness of from about 0.05 to about 5 microns. The charge blocking layer prevents charge injection from the conductive layer into the photogeneration layer and also transfers the discharged electrons into the conductive layer.

Generally, the adhesive layer is situated between the generator layer and the blocking layer, and has a thickness of from about 0.01 to about 2 microns. The adhesive layer may be selected from several known adhesives, such as PE-100, PE-200, and 49000 available from Du Pont Chemical Company, or 4-polyvinylpyridine.

If desired, the photoreceptor may also include a suitable overcoating. Typical overcoatings include silicone overcoatings described, for example, in U.S. Patent 4,565,760, polyamide overcoatings such as Elvamide, available from E.I. Du Pont de Nemours & Company, tin oxide particles dispersed in a binder described, for example, in U.S. Patent 4,426,435, metallocene compounds in a binder described, for example, in U.S. Patent 4,315,980, antimony-tin particles in a binder, charge transport molecules in a continuous binder phase with charge injection particles described in U.S. Patent 4,515,882, polyurethane overcoatings, and the like. The choice of overcoating materials would depend upon the specific photoreceptor prepared and the protective quality and electrical performance desired. Generally, any overcoatings applied have a thickness between about 0.5 micron and about 10 microns.

Any of the coating materials comprising film forming polymers may be deposited on the imaging member from solutions, dispersions, emulsions or powders by any suitable technique. However, the deposited coating should form a thin substantially uniform fluid coating on the mandrel prior to solidification of the coating. The coating materials can be included in the mixture initially introduced into the mold and subsequently separated into layers during centrifugal casting. A coating material can also be introduced into the mold subsequent to the separation of at least two components of the initial mixture during the casting process; the additional coatings can be introduced into the mold either before, during, or after curing to the initial mixture. In addition, a coating material can be introduced into the mold, spin cast, and cured prior to introduction into the mold of the mixture of materials to be separated. Further, a coating material can be applied by conventional techniques to a multilayered cylindrical articles prepared according to the present invention before or after the cylinder has been removed from the mold. Typical techniques for depositing coatings include spray coating, dip coating, wire wound rod coating, powder coating, electrostatic spraying, sonic spraying, blade coating, and the like. If the coating is applied by spraying, spraying may be effected with or without the aid of a gas. Spraying may be assisted by mechanical and/or electrical aids such as in electrostatic spraying. Materials and process parameters are interdependent in a spray coating operation. Some of the process parameters include propellant gas pressure, solution flow rate, secondary gas nozzle pressure, gun to substrate distance, gun traversal speed and mandrel rotation rate. Materials parameters include, for example, solvent mixtures which affect drying characteristics, the concentration of dissolved solids, the composition of the dissolved solids (e.g. monomer, polymer), and the concentration of dispersed solids when dispersions or solutions are utilized. The deposited coating should be uniform, smooth, and free from blemishes such as entrained gas bubbles and the like. In addition, any of the layers can be deposited on the imaging member by spin casting processes. In this process, the

multilayered cylinder formed according to the present invention remains in the mold, and either before or after curing or setting of the material, additional layer materials are introduced into the mold and the mold is spun to deposit the layers uniformly on the inner surface of the multilayered cylinder. The additional layers are then cured according to whatever process is appropriate for the material, such as heat, light exposure, activation of a catalyst, or the like.

Electrophotographic imaging members which can be prepared according to the present invention comprise a conductive substrate layer and a photoconductive layer. Any one or more of the other layers described herein can also be present in the imaging member. In addition, multilayered cylindrical articles prepared according to the present invention can be employed as ionographic electroreceptors. Ionographic processes are described in, for example, U.S. Patent 3,564,556, U.S. Patent 3,611,419, U.S. Patent 4,619,515, U.S. Patent 4,240,084, U.S. Patent 4,569,584, U.S. Patent 4,463,363, U.S. Patent 2,919,171, U.S. Patent 4,524,371, U.S. Patent 4,254,424, U.S. Patent 4,538,163, U.S. Patent 4,409,604, U.S. Patent 4,408,214, U.S. Patent 4,365,549, U.S. Patent 4,267,556, U.S. Patent 4,160,257, and U.S. Patent 4,155,093. An ionographic electroreceptor generally comprises at least a conductive layer and a dielectric layer. Ionographic electroreceptors can be prepared according to the present invention by, for example, forming a multilayered cylinder having a conductive inner layer and a dielectric or insulating outer layer.

The electroreceptor thus prepared can be employed in an ionographic imaging process. Thus the complete procedure comprises (1) preparing an imaging member having a conductive layer and an insulating layer by the process in accordance with the present invention; (2) forming an electrostatic latent image on the imaging member by ion deposition; (3) developing the latent image; and (4) transferring the developed image to a substrate. Optionally, the transferred image can be permanently affixed to the substrate by any suitable means.

Any suitable dry or liquid developer containing electrostatically attractable marking particles can be employed to develop the latent image in the electrophotographic and ionographic imaging processes.

Any suitable development technique can be utilized to deposit toner particles on the electrostatic latent image on an imaging member prepared according to the present invention. Well known development techniques include magnetic brush development, cascade development, powder cloud development, electrophoretic development, and the like. Magnetic brush development is more fully described, for example, in U.S. Patent 2,791,949; cascade development is more fully described, for example, in U.S. Patent 2,618,551 and U.S. Patent 2,618,552; powder cloud development is more fully described, for example, in U.S. Patent 2,725,305, U.S. Patent 2,918,910, and U.S. Patent 3,015,305; and liquid development is more fully described, for example, in U.S. Patent 3,084,043.

The deposited toner image is subsequently transferred to a substrate, such as paper, transparency material, or the like. Transfer can be enhanced by applying an electrostatic charge to the rear surface of the substrate by a charging means such as a corona device. The deposited toner image can be transferred to a substrate such as paper or transparency material by any suitable technique, such as corona transfer, pressure transfer, adhesive transfer, bias roll transfer, and the like. Typical corona transfer entails contacting the deposited toner particles with a sheet of paper and applying an electrostatic charge on the side of the sheet opposite to the toner particles. A single wire corotron having applied thereto a potential of between about 5000 and about 8000 volts provides satisfactory transfer. After transfer, the transferred toner image can be fixed to the receiving sheet. Typical well known fusing techniques include heated roll fusing, flash fusing, oven fusing, cold pressure fusing, laminating, adhesive spray fixing, and the like.

Specific embodiments of the invention will now be described in detail. These examples are intended to be illustrative only. All parts and percentages are by weight unless otherwise indicated.

## EXAMPLE I

A two-layer cylindrical drum was prepared as follows. To 75 milliliters of Polylite 33-402 (an unsaturated polyester dissolved in a styrene monomer that acts as a crosslinking agent, obtained from Reichhold Ltd.) with a density of 1.08 grams per milliliter was added 34.87 grams of silver coated hollow glass spheres with a density of about 0.65 gram per milliliter (Metalite Ag SF-14, obtained from PQ Corporation), and 1.5 milliliters of methyl ethyl ketone peroxide (Lupersol DDM-9, obtained from Lucidol Division, Pennwalt Corporation) as a polymerization initiator. The ingredients were mixed and the mixture was deposited by manual pouring into a 304 stainless steel mold with an inner diameter of 2.5554 inches rotated at a speed of 350 revolutions per minute. The mold was rotated by placing end caps on each end of the mold, with each end cap having a hole in the center. The end caps were then placed on the rotating pivots of a bench center rotating apparatus obtained from Brown & Sharpe Company similar to the apparatus illustrated in Figure 2. The resin in the mixture was cured after about 1 hour of spinning at 350 revolutions per minute at room temperature, resulting in formation of a two-layer cylindrical drum having an outer layer 0.0048 inch thick consisting of the cured polyester resin and a conductive inner layer about 1/10 inch thick consisting of the silver coated glass spheres in a matrix of the cured polyester resin. Upon curing, the solid cylindrical drum exhibited sufficient shrinkage to enable removal from the mold simply by lifting it out. The cured cylindrical drum exhibited a maximum runout of 0.0015 inch. Maximum runout refers to the deviation of the cylinder cross-section from a perfect circle, and is measured by rotating the drum with an indicator in contact with the cylindrical surface and measuring the degree of radial movement of the indicator. In addition, the cured cylindrical drum exhibited a straightness of 0.00075 inch. Straightness refers to the deviation of the cylinder walls from a straight line, and is measured by passing an indicator along the length of the cylinder surface and measuring the degree of radial movement of the indicator. The article thus produced is, for example, suitable for use as an ionographic dielectric receiver. In addition, the article thus produced can be coated with a photogenerating layer to form a photosensitive imaging member with a blocking layer situated between the conductive layer and the photogenerating layer.

## EXAMPLE II

A three-layer cylindrical drum was prepared as follows. To 225 grams of Polylite 33-402 (an unsaturated polyester dissolved in a styrene monomer that acts as a crosslinking agent, obtained from Reichhold Ltd.) with a density of 1.08 grams per milliliter was added 6 grams of silver coated glass fibers with a density of about 3.5 grams per milliliter (Ag Clad Filament 32, obtained from PQ Corporation), 2.5 grams of hollow glass spheres (Scotchlite C15/250, obtained from 3M Company) with a density of 0.15 gram per milliliter, and 2 milliliters of methyl ethyl ketone peroxide (Lupersol DDM-9, obtained from Lucidol Division, Pennwalt Corporation) as a polymerization initiator. The ingredients were mixed and the mixture was deposited with an air operated dispensing gun (Glenmarc Manufacturing Co, Portion-Aire PM-112HG) into a 440 stainless steel mold with an inner diameter of 3.313 inches rotated at a speed of 1,000 revolutions per minute. The mold was belt driven centrifugally, and was journaled for rotation on two supporting members with high speed ultra precision bearings in an apparatus similar to that illustrated in Figure 3. The resin in the mixture was cured after about 45 minutes of spinning at 1,000 revolutions per minute at room temperature, resulting in formation of a three-layer cylindrical drum having a conductive surface coating comprising the silver coated glass fibers dispersed in the resin, a dielectric pure resin middle layer, and a dielectric inner layer comprising the hollow glass spheres dispersed in the resin. Upon curing, the solid cylindrical drum exhibited sufficient shrinkage to enable removal from the mold simply by lifting it out. The cured cylindrical drum exhibited a maximum runout of 0.0003 inch, a straightness of 0.0004 inch, and a surface quality of 7 microinches, $R_a$. Surface quality refers to the height of surface defects or roughness irregularities. The $R_a$ is defined as the average value of the departures from the center line throughout a prescribed sampling length, and is determined by running a stylus along the surface, plotting the surface roughness, and measuring the peaks and valleys of the plot with respect to a center line drawn through the peaks and valleys. The article thus produced can be employed, for example, as a conductive substrate upon which can be coated a photogenerating layer to form an imaging member.

## EXAMPLE III

A two-layer cylindrical drum was prepared as follows. To 230 grams of Polylite 33-402 (an unsaturated polyester dissolved in a styrene monomer that acts as a crosslinking agent, obtained from Reichhold Ltd.) with a density of 1.08 grams per milliliter was added 4.6 grams of carbon black (GULF Acetylene black AB50P, obtained from Chevron Chemical Company), 2.5 grams of hollow glass spheres (Scotchlite C15/250, obtained from 3M Company) with a density of 0.15 gram per milliliter, and 4.6 milliliters of methyl ethyl ketone peroxide (Lupersol DDM-9, obtained from Lucidol Division, Pennwalt Corporation) as a polymerization initiator. The ingredients were mixed and the mixture was deposited with an air operated dispensing gun (Glenmarc Manufacturing Company, Portion-Aire PM-112HG) into a 440 stainless steel mold with an inner diameter of 3.313 inches rotated at a speed of 1,000 revolutions per minute. The mold was belt driven centrifugally, and was journaled for rotation on two supporting members with high speed ultra precision bearings in an apparatus similar to that illustrated in Figure 3. The resin in the mixture was cured after about 1 hour of spinning at 1,000 revolutions per minute at room temperature, resulting in formation of a two-layer cylindrical drum having a conductive surface coating comprising carbon-black loaded polyester and an inner layer comprising the hollow glass spheres dispersed in the resin. Because of the electrical conductivity of the polyester/carbon black matrix, a drum was obtained which was conductive through its cross section. Upon curing, the solid cylindrical drum exhibited sufficient shrinkage to enable removal from the mold simply by lifting it out. The cured cylindrical drum exhibited a maximum runout of 0.00075 inch, a straightness of 0.001 inch, and a surface quality of 4 microinches, $R_a$. The article thus produced can be employed, for example, as a conductive substrate upon which can be coated a photogenerating layer to form an imaging member.

## EXAMPLE IV

A three-layer cylindrical drum was prepared as follows. To 70 grams of Polylite 33-402 (an unsaturated polyester dissolved in a styrene monomer that acts as a crosslinking agent, obtained from Reichhold Ltd.) with a density of 1.08 grams per milliliter was added 20.0 grams of silicon carbide (silicon carbide powder, 400 grit, obtained from Tech-met Canada) with a density of 3.2 grams per milliliter, and 1.0 milliliter of methyl ethyl ketone peroxide (Lupersol DDM-9, obtained from Lucidol Division, Pennwalt Corporation) as a polymerization initiator. The ingredients were mixed and the mixture was deposited with an air operated dispensing gun (Glenmarc Manufacturing Company, Portion-Aire PM-112HG) into a 440 stainless steel mold with an inner diameter of 3.313 inches rotated at a speed of 2,000 revolutions per minute. The mold was belt driven centrifugally, and was journaled for rotation on two supporting members with high speed ultra precision bearings in an apparatus similar to that illustrated in Figure 3. The silicon carbide was allowed to settle for about 2 minutes with no curing of the resin while the mold rotated at 2,000 revolutions per minute, resulting in formation of two layers, with the outer layer comprising silicon carbide dispersed in the resin and the inner layer comprising the pure resin. Subsequently, to 100 grams of Polylite 33-402 (an unsaturated polyester dissolved in a styrene monomer that acts as a crosslinking agent, obtained from Reichhold Ltd.) with a density of 1.08 grams per milliliter was added 100 grams of silver coated glass fibers with a density of about 3.5 grams per milliliter (Ag Clad Filament 32, obtained from PQ Corporation) and 1.8 milliliters of methyl ethyl ketone peroxide (Lupersol DDM-9, obtained from Lucidol Division, Pennwalt Corporation) as a polymerization initiator. The ingredients were mixed and the mixture was deposited with an air operated dispensing gun (Glenmarc Manufacturing Company, Portion-Aire PM-112HG) into the mold rotating at 1,000 revolutions per minute. The silver coated glass fibers settled through the resin layer previously deposited to become situated against the silicon carbide layer. The resin in the mixture was cured after about 45 minutes of spinning at 1,000 revolutions per minute, with the mold being heated for the last 10 minutes of this period with a 1,000 watt, 208 volt heater operated at 55 percent power, resulting in formation of a three-layer cylindrical drum having a protective surface coating comprising silicon carbide dispersed in the resin, a conductive middle layer comprising the silver coated glass fibers dispersed in the resin, and a dielectric inner layer comprising the pure resin. Upon curing, the solid cylindrical drum exhibited sufficient shrinkage to enable removal from the mold simply by lifting it out. The article thus produced can be employed, for example, as an ionographic dielectric receiver with a protective surface coating, enabling long receiver life.

## EXAMPLE V

A three-layer cylindrical drum was prepared as follows. To 10 milliliters of Polylite 33-402 (an unsaturated polyester dissolved in a styrene monomer that acts as a crosslinking agent, obtained from Reichhold Ltd.) with a density of 1.08 grams per milliliter was added 0.2 milliliter of methyl ethyl ketone peroxide (Lupersol DDM-9, obtained from Lucidol Division, Pennwalt Corporation) as a polymerization initiator. The ingredients were mixed and the mixture was deposited with an air operated dispensing gun (Glenmarc Manufacturing Company, Portion-Aire PM-112HG) into a 440 stainless steel mold with an inner diameter of 3.313 inches rotated at a speed of 2,000 revolutions per minute. The mold was belt driven centrifugally, and was journaled for rotation on two supporting members with high speed ultra precision bearings in an apparatus similar to that illustrated in Figure 3. The resin was allowed to settle for about 2 minutes with no curing of the resin while the mold rotated at 2,000 revolutions per minute. Subsequently, 200 grams of Polylite 33-402 (an unsaturated polyester dissolved in a styrene monomer that acts as a crosslinking agent, obtained from Reichhold Ltd.) with a density of 1.08 grams per milliliter was mixed with 5 grams of carbon black (GULF Acetylene black AB50P, obtained from Chevron Chemical Company) and 3 milliliters of methyl ethyl ketone peroxide (Lupersol DDM-9, obtained from Lucidol Division, Pennwalt Corporation) as a polymerization initiator. The mixture was deposited with an air operated dispensing gun (Glenmarc Manufacturing Company, Portion-Aire PM-112HG) into the mold rotating at 1,000 revolutions per minute. Since the carbon black and the resin had similar densities, only minimal settling of the carbon black occured within the resin. The resin in the mixture was cured after about 45 minutes of spinning at 1,000 revolutions per minute, with the mold being heated for the last 10 minutes of this period with a 1,000 watt, 208 volt heater operated at 60 percent power, resulting in formation of a three-layer cylindrical drum having a dielectric surface coating comprising the pure resin, a conductive middle layer comprising the carbon black loaded resin, and a very thin (less than 0.001 inch thick) inner layer comprising the pure resin. Upon curing, the solid cylindrical drum exhibited sufficient shrinkage to enable removal from the mold simply by lifting it out. The article thus produced is, for example, suitable for use as an ionographic dielectric receiver. In addition, the article thus produced can be coated with a photogenerating layer to form a photosensitive imaging member with a blocking layer situated between the conductive layer and the photogenerating layer.

## EXAMPLE VI

A three-layer cylindrical drum was prepared as follows. To 230 grams of Polylite 33-402 (an unsaturated polyester dissolved in a styrene monomer that acts as a crosslinking agent, obtained from Reichhold Ltd.) with a density of 1.08 grams per milliliter was added 50 grams of silicon carbide (silicon carbide powder, 400 grit, obtained from Tech-Met Canada) with a density of 3.2 grams per milliliter, 75 grams of graphite powder (obtained from Fisher Scientific Company) with a density of 2.26 grams per milliliter, and 4.6 milliliters of methyl ethyl ketone peroxide (Lupersol DDM-9, obtained from Lucidol Division, Pennwalt Corporation) as a polymerization initiator. The ingredients were mixed and the mixture was deposited by manual pouring into a 304 stainless steel mold with an inner diameter of 3.332 inches rotated at a speed of 2,000 revolutions per minute. The mold was rotated by placing end caps on each end of the mold, with each end cap having a hole in the center. The end caps were then placed on the rotating pivots of a bench center rotating apparatus obtained from Brown & Sharpe Company similar to the apparatus illustrated in Figure 2. The mixture was spun for about 30 minutes at 2,000 revolutions per minute at room temperature, after which curing was effected by placing the mold in a convection oven at 100°C for 30 minutes and then cooling the mold to room temperature, resulting in formation of a three-layer cylindrical drum having a protective surface coating comprising the silicon carbide dispersed in the resin, a conductive middle layer comprising the graphite dispersed in the resin, and a dielectric inner layer comprising the pure resin. Upon curing, the solid cylindrical drum exhibited sufficient shrinkage to enable removal from the mold simply by lifting it out. The article thus produced can be employed, for example, as an ionographic dielectric receiver with a protective surface coating, enabling long receiver life.

## EXAMPLE VII

A two-layer cylindrical drum was prepared as follows. To 250 grams of Hetron 1222 resin (a vinyl ester, obtained from Ashland Chemicals) was added 7.5 grams of carbon black particles (Gulf acetylene black, AB50P, obtained from Chevron Chemical Company), 2.0 milliliters of cumene hydroperoxide (obtained from Lucidol Division, Pennwalt Corporation), 2.0 milliliters of t-butyl perbenzoate (obtained from Lucidol Division, Pennwalt Corporation), 5.0 grams of hollow glass spheres (Scotchlite E22/400, obtained from 3M Company, with a density of 0.22 gram per milliliter), and 24 drops of cobalt naphthenate (obtained from Fluka Chemika). The ingredients were mixed and the mixture was deposited with an air operated caulking gun (Glenmarc Manufacturing Company, Portion-Aire PM-112HG) into a 420 hardened stainless steel mold with an inner diameter of 3.3355 inches rotated at a speed of 2,500 revolutions per minute. The mold was rotated by placing end caps on each end of the mold, with each end cap having a hole in the center. The end caps were then placed on the rotating pivots of a bench center rotating apparatus obtained from Brown & Sharpe Company similar to the apparatus illustrated in Figure 2. Subsequent to dispensing of the material into the mold, the rotation speed was slowed to 500 revolutions per minute. The drum was then heated by an induction heater (Lepel, Model No. t-7-5-3-KC-SW operating at 50 percent power. The induction heating coil was a 1/8 inch copper tube with the coil spacing varied to achieve heating uniformity. The heating cycle was as follows:

Heater on for 45 seconds
Heater off for 30 seconds
Heater on for 15 seconds
Heater off for 2 minutes
Heater on for 20 seconds
Heater off for 2 minutes

The mold was then cooled for 1 minute with tap water, after which the two-layer drum thus formed was removed from the mold.

## EXAMPLE VIII

A two-layer drum prepared as described in Example I is incorporated into an ionographic imaging test fixture and a positively charged latent image is generated on the outer surface with an ionographic writing head. The latent image is developed with a negatively charged magenta liquid developer comprising an Isopar® G liquid vehicle, magenta toner particles in an amount of 1.5 percent by weight of the developer comprising about 15 percent by weight of Hostaperm Pink E pigment and about 85 percent by weight of poly(2-ethyl hexyl methacrylate) (Polysciences, Inc.), and OLOA 1200 in an amount of about 1 percent by weight of the solids content of the developer. Subsequently, the developed image is transferred to Xerox® 4024 paper.

The above process is repeated except that a negatively charged latent image is generated on the outer layer of the drum with the ionographic writing head and the latent image is developed with a two-component

developer comprising 2.5 percent by weight of a positively charged black toner prepared by mixing together 92 parts by weight of a styrene-n-butylmethacrylate resin, 6 parts by weight of Regal 330® carbon black from Cabot Corporation, and 2 parts by weight of cetyl pyridinium chloride and melt blending in an extruder, followed by micronization and air classification to obtain toner particles with an average diameter of 12 microns, and 97.5 percent by weight of a carrier prepared by solution coating a Hoeganoes Anchor Steel core with a particle diameter range of from about 75 to about 150 microns, available from Hoeganoes Company, with 0.4 parts by weight of a coating comprising 20 parts by weight of Vulcan carbon black, available from Cabot Corporation, homogeneously dispersed in 80 parts by weight of a chlorotrifluoroethylene-vinyl chloride copolymer, commercially available as OXY 461 from Occidental Petroleum Company, which coating was solution coated from a methyl ethyl ketone solvent. The developed image is transferred to Xerox® 4024 paper and affixed thereto by a heated fuser roll.

## EXAMPLE IX

A two-layer drum prepared as described in Example III is made into a photoreceptor by coating the drum with a photogenerating layer comprising an azo photogenerating pigment by the process described in Example V of U.S. Patent 4,797,337, wherein the photogenerating layer and charge transport layer are coated onto the conductive surface of the drum. The photoreceptor is then incorporated into an electrophotographic imaging test fixture and the imaging member is charged negatively with a corotron, followed by exposure of the charged member to a light image to form a negatively charged latent image on the member. The image is developed with a positively charged black toner as described in Example VII above and subsequently transferred and fused to Xerox® 4024 paper.

## EXAMPLE X

A single-layer cylindrical drum is prepared as follows. To 230 grams of Polylite 33-402 (an unsaturated polyester dissolved in a styrene monomer that acts as a crosslinking agent, obtained from Reichhold Ltd.) with a density of 1.08 grams per milliliter is added 4.6 grams of carbon black (GULF Acetylene black AB50P, obtained from Chevron Chemical Company) and 4.6 milliliters of methyl ethyl ketone peroxide (Lupersol DDM-9, obtained from Lucidol Division, Pennwalt Corporation) as a polymerization initiator. The ingredients are mixed and the mixture is deposited with an air operated dispensing gun (Glenmarc Manufacturing Company, Portion-Aire PM-112HG) into a 440 stainless steel mold with an inner diameter of 3.313 inches rotated at a speed of 1,000 revolutions per minute. The mold is belt driven centrifugally, and is journaled for rotation on two supporting members with high speed ultra precision bearings in an apparatus similar to that illustrated in Figure 3. The resin in the mixture is cured after about 1 hour of spinning at 1,000 revolutions per minute at room temperature, resulting in formation of a single-layer conductive cylindrical drum comprising carbon-black loaded polyester. Upon curing, the solid cylindrical drum exhibits sufficient shrinkage to enable removal from the mold simply by lifting it out. The article thus produced can be employed, for example, as a conductive substrate upon which can be coated a photogenerating layer to form an imaging member.

## Claims

1. A process for preparing a cylindrical article which comprises
   a. introducing into a cylindrical mold (1) a composition comprising a liquid, uncured resin material and a filler material;
   b. spinning the mold about its axis; and
   c. subsequently curing the resin to form the cylindrical article.

2. A process according to claim 1, wherein curing is effected by exposure to ultraviolet radiation.

3. A process according to claim 1, wherein curing is effected by heating.

4. A process according to claim 1, wherein curing is effected by activation of a catalyst.

5. A process according to any one of the preceding claims, wherein the filler material is a conductive material of a density similar to that of the uncured resin material, and in which the mold is spun at a speed that prevents separation of the uncured resin material and the filler material into layers.

**6.** A process according to any one of claims 1 to 4, wherein the filler material has a density different from that of the uncured resin material, and in which the mold is spun at a speed sufficient to cause separation of the uncured resin material and the filler material into layers whereby the curing step forms a cylindrical article having at least two layers (8, 10).

**7.** A process according to claim 6, wherein one of the materials is conductive and the other is a dielectric.

**8.** A process according to claim 6 or claim 7, wherein the density of the liquid uncured resin and the density of the filler material differ by from about 0.1 to about 0.4 gram per milliliter.

**9.** A process according to any one of claims 6 to 8, wherein an additional layer is formed on the cylindrical article by introducing an additional material into the mold subsequent to separation of the composition into layers, and spinning the mold to form a layer of the additional material on the inside surface of the cylindrical article.

**10.** A process according to claim 9, wherein the said resin is at least partially cured prior to introducing the additional material into the mold.

**11.** A process according to claim 9, wherein the said resin is cured subsequent to introduction of the additional material into the mold.

**12.** A process according to any one of claims 6 to 8, wherein an additional layer is formed on the cylindrical article by introducing an additional material into the mold prior to introduction of the said composition, spinning the mold about its axis to form a layer of the additional material on the mold surface, subsequently introducing the said composition into the mold and effecting the said separation of the composition into layers, thereby forming a cylindrical article having a layer of the additional material on the outer surface of the cylinder.

**13.** A process according to claim 12, wherein the additional material is at least partially cured prior to introducing the said composition into the mold.

**14.** A process according to claim 12, wherein the additional material is cured subsequent to introduction of the said composition into the mold.

**15.** A process according to any one of claims 1 to 8, wherein an additional layer is added to the cylindrical article subsequent to removal of the cylindrical article from the mold.

**16.** A process according to any one of claims 9 to 15, wherein the additional layer is a photogenerating material.

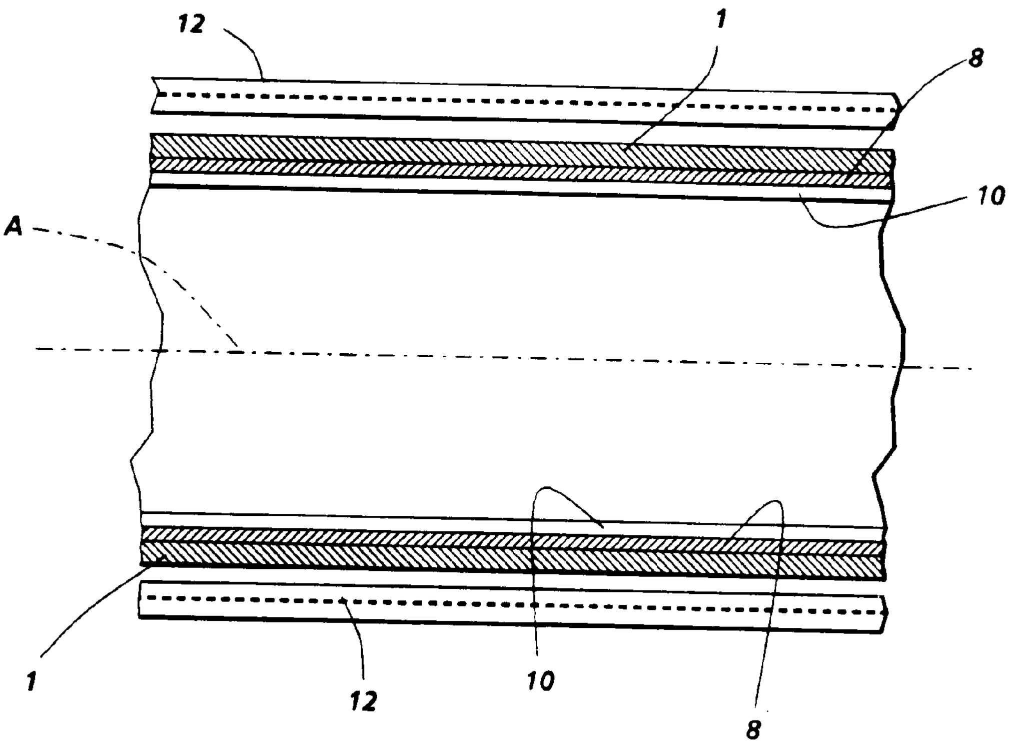


FIG. 1

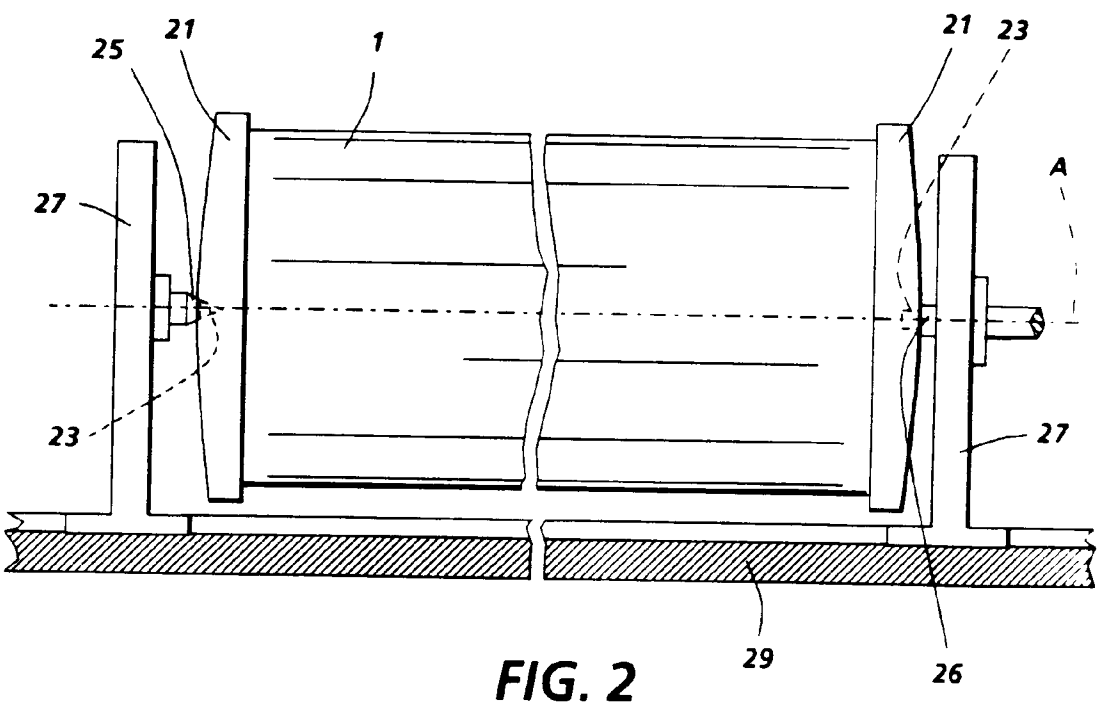


FIG. 2

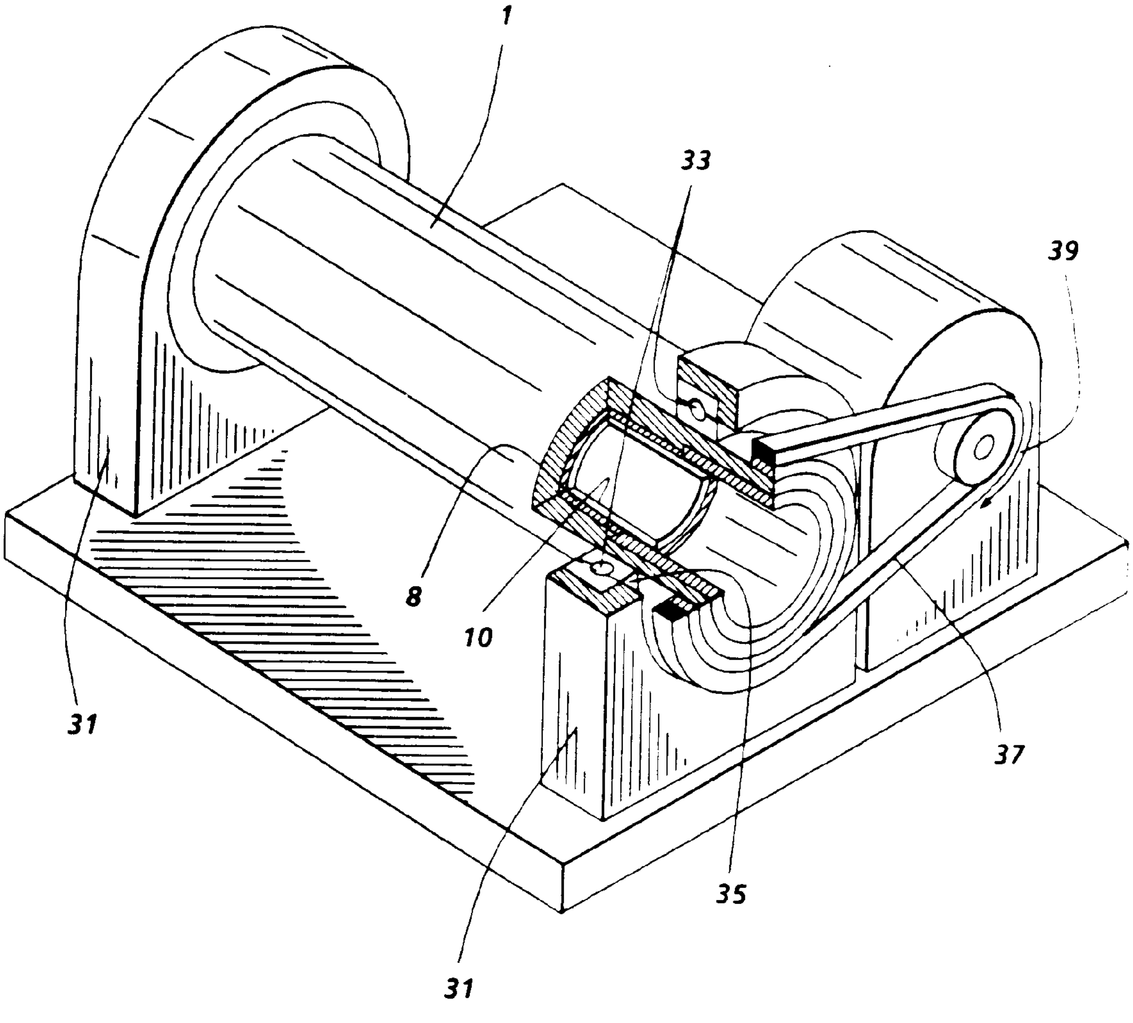


FIG. 3

European Patent Office

# EUROPEAN SEARCH REPORT

Application Number
EP 92 30 8505
PAGE1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 394 340 (TARUMI, ET AL)<br>* the whole document *<br>--- | 1,3 | G03G15/00<br>G03G5/00<br>B29C41/04 |
| X | PATENT ABSTRACTS OF JAPAN<br>vol. 11, no. 35 (P-542)(2482) 3 February 1987<br>& JP-A-61 203 460 ( DAICEL CHEM IND. ) 9 September 1986<br>* abstract *<br>--- | 1 | |
| X | PATENT ABSTRACTS OF JAPAN<br>vol. 10, no. 274 (P-498)(2330) 18 September 1986<br>& JP-A-61 095 361 ( HOKUSHIN IND. ) 14 May 1986<br>* abstract *<br>--- | 1 | |
| X | GB-A-2 166 370 (DAICEL CHEMICAL IND.)<br>* the whole document *<br>--- | 1 | TECHNICAL FIELDS SEARCHED (Int. Cl.5) |
| X | PATENT ABSTRACTS OF JAPAN<br>vol. 10, no. 257 (M-513)(2313) 3 September 1986<br>& JP-A-61 084 214 ( NIPPON PETROCHEM CO. ) 28 April 1986<br>* abstract *<br>--- | 1 | G03G<br>B29C |
| X | PATENT ABSTRACTS OF JAPAN<br>vol. 10, no. 15 (P-422)(2072) 21 January 1986<br>& JP-A-60 170 862 ( MINOLTA CAMERA ) 4 September 1985<br>* abstract *<br>---<br>-/-- | 1 | |

The present search report has been drawn up for all claims

| Place of search | Date of completion of the search | Examiner |
|---|---|---|
| BERLIN | 30 NOVEMBER 1992 | HOPPE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent Office

# EUROPEAN SEARCH REPORT

Application Number

EP 92 30 8505
PAGE2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.5 ) |
| A | PATENT ABSTRACTS OF JAPAN<br>vol. 11, no. 200 (C-431)(2647) 27 June 1987<br>& JP-A-62 021 722 ( SEIKO EPSON CORP. ) 30 January 1987<br>* abstract *<br>--- | 1 | |
| A | PATENT ABSTRACTS OF JAPAN<br>vol. 10, no. 2 (M-444)(2059) 8 January 1986<br>& JP-A-60 166 425 ( KAORU MITSUSADA ) 29 August 1985<br>* abstract *<br>----- | 1 | |
| | | | TECHNICAL FIELDS SEARCHED (Int. Cl.5 ) |

The present search report has been drawn up for all claims

| Place of search | Date of completion of the search | Examiner |
|---|---|---|
| BERLIN | 30 NOVEMBER 1992 | HOPPE H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)